# EUROPÄISCHE PATENTSCHRIFT

(11) **EP 0 471 929 B1**
(45) Veröffentlichungstag und Bekanntmachung des Hinweises auf die Patenterteilung: **08.12.1993**
(21) Anmeldenummer: 91108955.5
(22) Anmeldetag: 31.05.1991
(51) Int. Cl.: B60N 3/10

(54) **Vorrichtung zum Kühlen eines Handschuhfachs in einem Kraftfahrzeug**
Apparatus for cooling the glove base of an automotive vehicle
Dispositif pour refroidir la boîte à gants d'un véhicule automobile

(30) Priorität: 23.08.1990 DE 4026678
(43) Veröffentlichungstag der Anmeldung: 26.02.1992
(73) Patentinhaber: Coleman (Deutschland) GmbH, D-35410 Hungen (DE)
(72) Erfinder: Zorn, Manfred, W-6305 Alten-Buseck (DE)
(74) Vertreter: Weber, Otto Ernst, Dipl.-Phys.

(56) Entgegenhaltungen:
- DE-A- 3 019 092
- DE-A- 3 639 089
- DE-A- 3 739 151
- FR-A- 1 110 022
- US-A- 2 437 885
- US-A- 2 902 838
- US-A- 4 545 213

## Beschreibung

Die Erfindung betrifft eine Vorrichtung zum Kühlen eines Handschuhfaches in einem Kraftfahrzeug. Eine solche Vorrichtung ist aus der DE-A 37 39 151 bekannt. In dieser Druckschrift wird eine Kühlbox für ein Kraftfahrzeug beschrieben, die in einem Handschuhfach angeordnet ist. Diese Kühlbox wird über eine Lufteintrittsöffnung gekühlt, welche mit dem Kaltluftauslaß des im Kraftfahrzeug vorhandenen Klimageräts einer Klimaanlage verbunden ist. Die Kühlbox hat eine Luftauslaßöffnung zum Entweichen der durch die Kühlbox hindurchgeströmten Luft. Sie ist wannenförmig ausgebildet und an der Instrumententafel des Kraftfahrzeugs oberhalb einer Klapplade des Handschuhfaches ist eine Abdeckung vorgesehen, welche die Kühlbox bei geschlossener Klapplade nach oben abschließt. Diese bekannte Kühlbox ist nur in einem Kraftfahrzeug verwendbar, welches bereits mit einer Klimaanlage ausgestattet ist.

Weiterhin ist aus der DE-A 30 19 092 ein elektrisches Kleinkühlgerät für Getränkebehälter mit Peltier-Elementen bekannt, die mit ihrer bei entsprechender Stromrichtung kalten Fläche in Wärmekontakt mit einem im wärmeisolierten Innenraum angeordneten Wärmeleitelement stehen, so daß das Wärmeleitelement als ein an seiner Oberseite offener Topf mit zur formschlüssigen Aufnahme des größeren unteren Teils von Normalgetränkebehältern geeigneter Innenabmessung ausgebildet ist. Die kalte Seite des Peltier-Blocks ist mit einem Rippenwärmetauscher in Verbindung, über den mittels eines Ventilators Luft zur Kühlung in die Kühlbox geblasen wird.

Weiterhin ist aus der DE-A 36 39 089 eine thermoelektrische Kühlvorrichtung, insbesondere für Kühlboxen in Kraftfahrzeugen, mit einem aus mindestens einem Peltier-Block bestehenden thermo-elektrischen Kälteerzeuger bekannt. Die warme Seite dieses Peltier-Blocks ist mit einem von einem zwangsgeförderten Kühlmittel durchströmten ersten Wärmetauscher wärmeleitend verbunden. Die kalte Seite des Kälteerzeugers steht in wärmeleitender Verbindung mit einem als Rippenwärmetauscher ausgebildeten zweiten Wärmetauscher zum Kühlen eines zwangsumgewälzten Mediums, welches im Bereich des Rippenwärmetauschers durch einen Strömungskanal hindurchgeführt ist, dessen vollen Querschnitt der Rippenwärmetauscher einnimmt. Der erste Wärmetauscher ist von einem flüssigen Kühlmittel durchströmt, welches in einem Flüssigkeitskreislauf zwangsumgewälzt wird, der mit einem dritten Wärmetauscher in Form eines Luft/Flüssigkeits-Wärmetauschers zum Kühlen des flüssigen Kühlmittels versehen ist.

Auf dem oben beschriebenen Stand der Technik aufbauend liegt der Erfindung die **Aufgabe** zugrunde, eine Kühlvorrichtung der eingangs genannten Art zu schaffen, mit welcher bei einem sehr geringen technischen Kühlaufwand eine besonders wirkungsvolle Kühlung des Handschuhfaches erreicht werden kann.

Zur Lösung dieser Aufgabe sieht die Erfindung vor, daß im Innenraum des Handschuhfachs ein flexibler Beutel angeordnet ist, daß die Wände des flexiblen Beutels eine sehr geringe Wärmeleitfähigkeit aufweisen, daß der Beutel eine im wesentlichen wärmedicht verschließbare Öffnung aufweist, daß in dem Beutel eine Platte aus einem Material mit hoher Wärmeleitfähigkeit angeordnet ist und daß die Platte mit einem Peltier-Element in Wärmekontakt steht.

Gemäß der Erfindung ist der wesentliche Vorteil erreichbar, daß auch in einem Kraftfahrzeug, welches nicht mit einer Klimaanlage ausgestattet ist, der Innenraum eines Handschuhfachs wirksam gekühlt werden kann. Es bietet besondere Vorteile für die Insassen eines Kraftfahrzeugs, insbesondere für den Fahrer, daß zur Aufbewahrung von Getränken oder Eßwaren ein gekühlter Raum vorhanden ist, der auch vom Fahrersitz aus zugänglich ist. Dabei erweist es sich als besonders vorteilhaft, daß der Kühlraum durch einen flexiblen Beutel gebildet wird, der in bestimmten Grenzen in seiner Größe variabel ist.

Eine besonders vorteilhafte Ausführungsform des flexiblen Beutels, der gemäß der Erfindung den eigentlichen Kühlraum umgibt, zeichnet sich dadurch aus, daß die Größe des Kühlraums durch entsprechende Zusammenfaltung des Beutels verändert werden kann. Es kann somit das Volumen des gekühlten Raums dem Kühlgut angepaßt werden. Dadurch wird die Kühlung besonders wirksam und es wird Energie gespart. Wenn nämlich der gekühlte Raum in seinen äußeren Abmessungen dem Kühlgut angepaßt werden kann, wie es gemäß der Erfindung geschieht, muß kein unnötiges Volumen auf möglichst geringer Temperatur gehalten werden. Die möglichst variable und flexible Gestaltung der Größe des Kühlraums läßt sich beispielsweise auch dadurch erreichen, daß der flexible Beutel Laschen aufweist, die zur gewünschten Formgebung des Kühlraums entsprechend übereinandergeschlagen und durch Klettverschlüsse aneinander befestigt werden.

Weiterhin wird gemäß der Erfindung der ganz entscheidende Vorteil erreicht, daß der flexible Beutel, wenn er nicht benötigt wird, flach zusammengefaltet werden kann, so daß der Innenraum des Handschuhfachs praktisch vollständig anderweitig genutzt werden kann.

Eine besonders vorteilhafte Weiterbildung des Erfindungsgegenstandes sieht vor, daß die Wände des Beutels aus einem Material mit hoher Wärmedämmung bestehen. Wenn bereits das Material, welches zur Herstellung des Beutels verwendet wird, besonders gute Wärmedämmeigenschaften aufweist, kann der zur Kühlung erforderliche Energiebedarf sehr gering gehalten werden. Dabei erweist es sich als vorteilhaft, daß die Wände des Beutels aus Schaumstoffmaterial bestehen, welches eine gute Wärmeisolierung gewährleistet.

Weiterhin kann vorteilhafterweise auch vorgesehen sein, daß die Wände des Beutels eine geschlossen-porige Schicht aufweisen, in welcher wabenförmige Zellen zwischen mehreren Materiallagen angeordnet sind. Es läßt sich auch gemäß der Erfindung ein Material verwenden, welches weniger durch die eigentlichen Materialeigenschaften als durch die Struktur eine gute Wärmeisolierung herbeiführt.

Wenn gemäß einer weiteren vorteilhaften Ausführungsform des Erfindungsgegenstandes der Beutel flach zusammenfaltbar ausgebildet ist, steht praktisch der gesamte Innenraum des Handschuhfachs zur anderweitigen Verwendung zur Verfügung, wenn kein Bedarf besteht, Getränke, Speisen oder anderes Kühlgut bei geringer Temperatur aufzubewahren.

Ein möglichst großes Volumen für einen gekühlten Raum ergibt sich gemäß einer weiteren vorteilhaften Ausgestaltung des Erfindungsgegenstandes dadurch, daß der Beutel in aufgefaltetem Zustand im wesentlichen den gesamten Innenraum des Handschuhfachs einnimmt.

Weiterhin zeichnet sich eine vorteilhafte Ausgestaltung des Erfindungsgegenstandes dadurch aus, daß die Platte entlang einer Handschuhfach-Wand angeordnet ist und zwischen der Platte und dieser Handschuhfach-Wand eine Beutelwand festgeklemmt ist. Dabei kann weiterhin zugleich vorteilhafterweise vorgesehen sein, daß sich die Platte über im wesentlichen die gesamte Innenfläche derjenigen Beutelwand erstreckt, welche entlang der Handschuhfach-Wand angeordnet und durch die Platte an dieser Handschuhfach-Wand festgeklemmt ist. Auf diese Weise ergibt sich eine Anordnung, welche nur ein Minimum an Platz im Handschuhfach benötigt, so daß praktisch kein Innenraum des Handschuhfachs verlorengeht, wenn der flexible Beutel zusammengefaltet ist. Zugleich ergibt sich eine möglichst einfache Konstruktion für die Anbringung der erfindungsgemäßen Kühlvorrichtung im Bereich des Handschuhfachs.

Vorzugsweise ist weiterhin vorgesehen, daß die Platte aus Aluminium besteht, welches ein hohes Wärmeleitvermögen aufweist. Um die Wärme aus dem flexiblen Beutel wirksam abzuführen, welcher den Kühlraum umschließt, ist vorzugsweise vorgesehen, daß die Heißseite des Peltier-Elements mit einem außerhalb des Handschuhfachs angeordneten Kühlblech verbunden ist. Wenn eine besonders gute Kühlwirkung erwünscht ist, ist es möglich, die Wärmeabführung von dem Kühlblech durch einen Ventilator zu unterstützen.

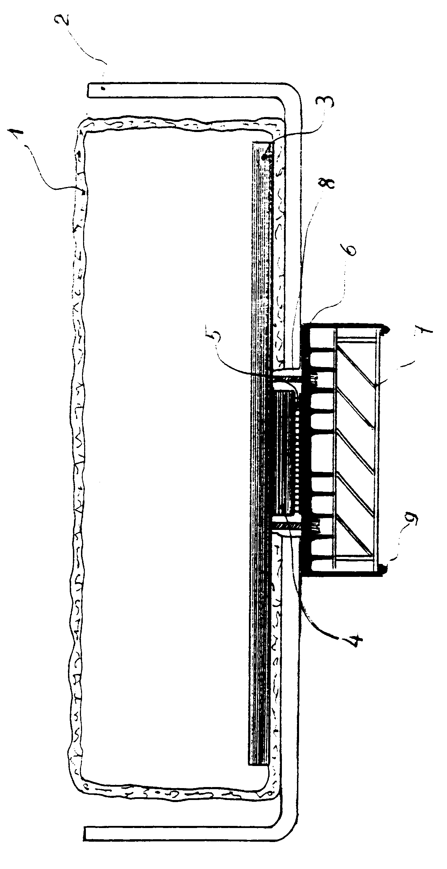

Die Erfindung wird nachfolgend beispielsweise anhand der Zeichnung beschrieben; in dieser zeigt die einzige Figur einen Schnitt durch ein Handschuhfach, welches mit einer erfindungsgemäßen Kühlvorrichtung ausgestattet ist.

Gemäß der Zeichnung ist ein flexibler Beutel 1 in einem rein schematisch dargestellten Handschuhfach 2 angeordnet. Der flexible Beutel 1 ist in seiner aufgefalteteten Position gezeichnet, in welcher er praktisch den gesamten Innenraum des Handschuhfachs 2 ausfüllt. Natürlich könnte die Anordnung auch derart getroffen sein, daß beispielsweise nur die Hälfte oder ein anderer Teil des Handschuhfachs von dem flexiblen Beutel ausgefüllt wird, wenn er vollständig aufgefaltet ist.

Der Verschluß des flexiblen Beutels 1 ist nicht dargestellt. Es versteht sich, daß ein möglichst gut wärmedichter Verschluß erforderlich ist, um Energieverluste zu vermeiden. Mit Klettverschlüssen versehene Laschen, die in möglichst variabler Weise übereinander zu schlagen sind, erweisen sich als besonders vorteilhaft, um einerseits einen in seiner Größe variablen Kühlraum zu umschließen und andererseits eine gute Wärmeisolierung zu ermöglichen.

Eine Wand des Beutels 1 ist entlang einer Wand des Handschuhfachs 2 angeordnet, und zwar zwischen dieser Wand dieses Handschuhfachs einerseits und einer Platte 3 andererseits. Die Platte 3 besteht vorzugsweise aus Aluminium mit besonders guten Wärmeleiteigenschaften. Die Oberfläche dieser Platte weist vorzugsweise 1 bis 2 mm hohe Längsrippen auf, um dem Innenraum des Beutels 1 eine möglichst große Oberfläche darzubieten. Mit der Platte 3 ist eine rechteckige Metallplatte 4 verbunden, welche auf ihrer von der Platte 3 abgewandten Seite mit der einen Wirkfläche (Kaltseite) eines thermo-elektrischen Peltier-Elements 5 verbunden ist. Die andere Wirkfläche (Heißseite) des Peltier-Elements 5 ist mit einem Kühlblech 6 verbunden, welches aus extrudiertem Aluminium besteht.

Mit Hilfe von Schrauben 8, welche durch das Kühlblech 6 hindurchgeführt sind, sind die Platte 3 und das Kühlblech 6 miteinander verbunden. Zwischen den Schrauben 8 und dem Kühlblech 6 sind jeweils Isolierbuchsen aus einem Material mit geringem Wärmeleitvermögen eingesetzt. Durch die Schrauben 8 wird die Platte 3 fest an die Wand des Handschuhfachs 2 angedrückt und es wird zwischen der Platte 3 und dieser Wand des Handschuhfachs 2 die Wandung des Beutels 1 festgeklemmt.

Auf diese Weise wird durch eine geschickte und raumsparende Konstruktion eine besonders große Oberfläche der Platte 3 in dem flexiblen Beutel 1 geschaffen, es wird zugleich dem flexiblen Beutel 1 eine gewisse Formbeständigkeit im Bereich einer Handschuhfach-Wand erteilt und es wird der flexible Beutel 1 außerdem im Innenraum des Handschuhfachs an einer vorgebbaren Stelle eindeutig und stabil fixiert.

Die Platte 3 übt daher eine Mehrfach-Funktion aus, indem sie neben der Kühlfunktion auch die Formgebung des Beutels 1 und seine Lagefixierung ermöglicht.

In das Kühlblech 6, welches in seiner Oberfläche derart gestaltet ist, daß eine möglichst gute Wärmeabgabe erreicht wird, ist zur Beschleunigung der benötigen Kühlluft ein Ventilator 7 eingesetzt, der mit vier Schrauben 9 befestigt ist. Zur Anbringung der erfindungsgemäßen Kühlvorrichtung genügt es, in einer Wand des Handschuhfachs eine relativ kleine Öffnung zu schaffen, deren Größe und Abmessungen im wesentlichen denjenigen des verwendeten Peltier-Elements 5 entsprechen sollte, um eine besonders raumsparende Anordnung zu erreichen. Das Peltier-Element 5 wird dann praktisch in der Öffnung in der Wand des Handschuhfachs angeordnet, so daß dafür praktisch kein zusätzlicher Raum benötigt wird. Die Metallplatte 4 kann in ihrer Dicke derart bemessen werden, daß die oben erläuterte Verklemmung des Beutels 1 gegenüber einer Handschuhfach-Wand unter Berücksichtigung der individuellen Abmessungen und Wandstärken erreicht wird. Es übernimmt somit die Metallplatte 4 nicht nur die Wärmeleitung zwischen der Platte 3 und dem Peltier-Element 5, diese Metallplatte dient zugleich auch als variables Distanzstück, um für jeden einzelnen Fall optimale Montagevoraussetzungen zu treffen.

## Patentansprüche

1. Vorrichtung zum Kühlen eines Handschuhfaches (2) in einem Kraftfahrzeug,
dadurch **gekennzeichnet**,
(a) daß im Innenraum des Handschuhfaches (2) ein flexibler Beutel (1) angeordnet ist,
(b) daß die Wände des flexiblen Beutels (1) eine sehr geringe Wärmeleitfähigkeit aufweisen,
(c) daß der Beutel (1) eine im wesentlichen wärmedicht verschließbare Öffnung aufweist,
(d) daß in dem Beutel (1) eine Platte (3) aus einem Material mit hoher Wärmeleitfähigkeit angeordnet ist und
(e) daß die Platte (3) mit einem Peltier-Element (5) in Wärmekontakt steht.

2. Vorrichtung nach Anspruch 1,
dadurch **gekennzeichnet**,
daß die Wände des Beutels (1) aus einem Material mit hoher Wärmedämmung bestehen.

3. Vorrichtung nach Anspruch 1 oder 2,
dadurch **gekennzeichnet**,
daß die Wände des Beutels (1) aus Schaumstoff-Material bestehen.

4. Vorrichtung nach Anspruch 1 oder 2,
dadurch **gekennzeichnet**,
daß die Wände des Beutels (1) eine geschlossen-porige Schicht aufweisen, in welcher wabenförmige Zellen zwischen mehreren Materiallagen angeordnet sind.

5. Vorrichtung nach einem der vorhergehenden Ansprüche,
dadurch **gekennzeichnet**, daß der Beutel (1) flach zusammenfaltbar ausgebildet ist.

6. Vorrichtung nach einem der vorhergehenden Ansprüche,
dadurch **gekennzeichnet**,
daß der Beutel (1) in aufgefaltetem Zustand im wesentlichen den gesamten Innenraum des Handschuhfachs (2) einnimmt.

7. Vorrichtung nach einem der vorhergehenden Ansprüche,
dadurch **gekennzeichnet**,
daß die Platte (3) entlang einer Handschuhfach-Wand angeordnet ist und zwischen der Platte (3) und dieser Handschuhfach-Wand eine Beutelwand festgeklemmt ist.

8. Vorrichtung nach Anspruch 7,
dadurch **gekennzeichnet**,
daß sich die Platte (3) über im wesentlichen die gesamte Innenfläche derjenigen Beutelwand erstreckt, welche entlang der Handschuhfach-Wand angeordnet und durch die Platte (3) an dieser Handschuhfach-Wand festgeklemmt ist.

9. Vorrichtung nach einem der vorhergehenden Ansprüche,
dadurch **gekennzeichnet**,
daß die Platte (3) aus Aluminium besteht.

10. Vorrichtung nach einem der vorhergehenden Ansprüche,
dadurch **gekennzeichnet**,
daß die Heißseite des Peltier-Elements (5) mit einem außerhalb des Handschuhfachs (2) angeordneten Kühlblech (6) verbunden ist.

## Claims

1. Apparatus for cooling a glove compartment (2) in a motor vehicle,
**characterized** in that
(a) a flexible bag (1) is arranged in the interior of the glove compartment (2),
(b) the walls of the flexible bag (1) have a very low thermal conductivity,
(c) the bag (1) has a substantially heat-tight-closable opening,
(d) a plate (3) made from a material with a high thermal conductivity is placed in the bag (1) and
(e) the plate (3) is in thermal contact with a Peltier element (5).

2. Apparatus according to claim 1,
**characterized** in that
the walls of the bag (1) are made from a material with good heat protection.

3. Apparatus according to claim 1 or 2,
**characterized** in that
the walls of the bag (1) are made from foam material.

4. Apparatus according to claim 1 or 2,
**characterized** in that
the walls of the bag (1) have a closed-pore layer, in which honeycomb cells are placed between several material layers.

5. Apparatus according to one of the preceding claims,
**characterized** in that
the bag (1) can be folded up flat.

6. Apparatus according to one of the preceding claims,
**characterized** in that
in the unfolded open state the bag (1) takes up virtually the entire interior of the glove compartment (2).

7. Apparatus according to one of the preceding claims,
**characterized** in that
the plate (3) is arranged along a glove compartment wall and a bag wall is secured between the plate (3) and said glove compartment wall.

8. Apparatus according to claim 7,
**characterized** in that
the plate (3) extends over substantially the entire inner surface of said bag wall, which is positioned along the glove compartment wall and is fixed to the latter by the plate (3).

9. Apparatus according to one of the preceding claims,
**characterized** in that
the plate (3) is made from aluminium.

10. Apparatus according to one of the preceding claims,
**characterized** in that
the hot side of the Peltier element (5) is connected to a cooling plate (6) located outside the glove compartment (2).

## Revendications

1. Dispositif de refroidissement d'une boîte à gants (2) dans un véhicule automobile, caractérisé en ce que :
a) à l'intérieur de la boîte à gants (2) se trouve une poche souple (1)
b) les parois de la poche souple (1) présentent une très faible conductibilité thermique,
c) la poche (1) présente un orifice obturable essentiellement étanche à la chaleur,
d) à l'intérieur de la poche (1) se trouve une plaque (3) en matériau très bon conducteur de la chaleur,
e) la plaque (3) est en contact thermique avec un élément Peltier (5).

2. Dispositif selon la revendication 1, caractérisé en ce que les parois de la poche (1) sont constituées en matériau à isolation thermique élevée.

3. Dispositif selon la revendication 1 ou 2, caractérisé en ce que les parois de la poche (1) sont en matériau expansé.

4. Dispositif selon la revendication 1 ou 2, caractérisé en ce que les parois de la poche (1) présentent une couche poreuse fermée, dans laquelle des cellules en nids d'abeilles sont disposées entre plusieurs couches de matériau.

5. Dispositif selon l'une des revendications précédentes, caractérisé en ce que la poche (1) est constituée de façon à pouvoir se replier à plat.

6. Dispositif selon l'une des revendications précédentes, caractérisé en ce que la poche (1) à l'état déplié occupe essentiellement le volume total intérieur de la boîte à gants (2).

7. Dispositif selon l'une des revendications précédentes, caractérisé en ce que la plaque (3) est disposée le long d'une paroi de boîte à gants et qu'entre la plaque (3) et cette paroi de boîte à gants, est coincée une paroi de poche.

8. Dispositif selon la revendication 7, caractérisé en ce que la plaque (3) s'étend essentiellement sur toute la surface interne de la paroi de poche qui est disposée le long de la paroi de boîte à gants et qui est fixée par la plaque (3) contre cette paroi de boîte à gants.

9. Dispositif selon l'une des revendications précédentes, caractérisé en ce que la plaque (3) est en aluminium.

10. Dispositif selon l'une des revendications précédentes, caractérisé en ce que la face très chaude de l'élément Peltier (5) est reliée à une tôle réfrigérante (6) disposée à l'extérieur de la boîte à gants (2).
